# EUROPEAN PATENT APPLICATION

(11) **EP 1 338 939 A1**
(43) Date of publication of application: **27.08.2003**
(21) Application number: 02354033.9
(22) Date of filing: 22.02.2002
(51) Int. Cl.: G06F 1/00

(54) **State validation device for a computer**

(71) Applicant: Hewlett-Packard Company, Palo Alto, California 94304-1112 (US)
(72) Inventor: Chaboud, Francois-Xavier, 38000 Grenoble (FR); Drif, Dany, 73000 Chambry (FR); Owhadi, Eric, 38360 Sassenage (FR)
(74) Representative: Lloyd, Richard Graham

(57) **Abstract**

A validation device for a computer comprising hardware and software, the validation device being operable to;
record changes to the hardware and software,
and transmit change information identifying the changes to a validating system,
the validation device further being operable to
receive a validity request from a portable communication device, and
transmit validation information to the portable communication device to enable a user to check the integrity of the computer.

## Description

### Field of the Invention

This invention relates to a validation device for a computer, a portable communication device to check the integrity of the computer a validating system to validate hardware or software changes to the computer and an integrity checking system to enable a third party to check the integrity of the computer.

### Background of the Invention

A key aim of computer security is to ensure that a user's data and information are safe, and are not subject to interception, corruption, or malicious use. A known route to obtain unauthorised access to a user's data or information is to insert a so-called "Trojan Horse" into an apparently legitimate program which is operable to perform some malicious action. Software viruses are also known, which are able to replicate themselves and spread between computer systems, and which may carry a "payload" designed to carry out some malicious action, in response to, for example, a date trigger. The widespread availability of programs and other information able to be downloaded from the Internet provides a route for the propagation of Trojan Horses, viruses and malicious programs in that a user may download an apparently innocent program from the Internet and in so doing unwittingly violate the integrity of their computer.

In response to this threat, a number of approaches are known to enable a user to maintain the integrity of his computer. Virus checking software is well known, in which the monitoring program checks data or programs for the "signatures", for example a particular code pattern, of known viruses. Certification services, such as that provided by Verisign (TM) enable a digital certificate including a hash checksum to be attached to a program or other data, and enable a user to check that the program has not been tampered with by verifying the validity of the certificate and checking that the checksum is unchanged. As a further line of defence, it is possible to provide a system whereby the integrity of a computer system's software is checked on start-up, US patent no US 5421006 discloses a method whereby a core set of trusted applications are established on boot-up. Where an untrusted application is to be run, a latch is set preventing the untrusted application from reading and/or writing to security relevant data during operation. In the event of a virus or Trojan horse attack, it is known to provide system recovery programs which, for example, restore the configuration, hard drive contents and memory contents of a computer to a known, safe setting. It is further known to check with a software manufacturer, for example via a website, whether or not a piece of software is legitimate and unmodified. Indeed, this is a requirement for operation of some pieces of software, such as the Windows XP (TM) operating system.

While all of the above precautions enable a user to protect their own computer system, a problem arises when a user wishes to use an unknown computer outside his control. In such circumstances, the user has to trust the owner and operator of the computer that appropriate security precautions have been taken and that the computer's integrity is unviolated. It might be envisaged that there are circumstances in which a user would be unwilling to repose such trust in an unknown computer.

An aim of the present invention is to provide a device whereby a user can check a computers integrity prior to use.

### Summary of the Invention

According to a first aspect of the invention, we provide a validation device for a computer comprising hardware and software, the validation device being operable to record changes to the hardware and software, and transmit change information identifying the changes to a validating system, the validation device further being operable to receive a validity request from a portable communication device, and transmit validation information to the portable communication device to enable a user to check the integrity of the computer.

The change information may comprise an identification number identifying the computer.

The validation information may comprise the identification number.

The validation information may comprise the change information.

The validation device may be operable to receive a certificate from the validating system confirming the integrity of the computer and store the certificate, and wherein the validation information comprises the certificate.

The validation device may comprise a wireless communication device whereby the validation device can receive the validity request from the portable communication device and transmit the validation information to the portable communication device.

The validation device may be operable to transmit the change information to the validating system via the Internet.

According to a second aspect of the invention, we provide a portable communication device operable to check the integrity of a computer, the portable communication device being operable to transmit a validity request to a validation device associated with the computer, receive validation information from the validation device, transmit the validation information to a validating system and receive a response from the validation system indicating the integrity of the computer.

The validation information may comprise one or more of an identification number identifying the computer, change information identifying changes to hardware and software of the computer, and a certificate from a validating system.

The portable communication device may be operable to establish a wireless link with the validation device whereby the portable communication device can transmit the validity request to the validation device and receive the validation information from the validation device.

According to a third aspect of the invention, we provide a validating system for validating changes to hardware and software of a computer, the validating system being operable to receive change information identifying changes to the hardware and software, receive an identification number identifying the computer, check the validity of the changes and transmit a response indicating the integrity of the system.

The change information may be received from a validation device associated with the computer and wherein the response is transmitted to a portable communication device which supplies the identification number.

The change information may be received from a validation device associated with the computer and wherein the response is transmitted to the validation device, the response comprising a certificate.

The change information may be received from a portable communication device together with the identification number and wherein the response is transmitted to the portable communication device.

According to a fourth aspect of the invention, we provide a integrity checking system for a computer comprising a validation device according to the first aspect of the invention and a validating system according to the third aspect of the invention.

The integrity checking system may comprise a portable communication device according to the second aspect of the invention.

### Brief Description of the Drawings

One or more embodiments of the present invention will now be described by way of example only with reference to the accompanying drawings, wherein:
Figure 1 is a diagrammatic illustration of a integrity checking system embodying the present invention,
Figure 2a and 2b are flow diagrams showing a method of operation of an integrity checking system embodying the present invention,
Figures 3a and 3b are flow diagrams showing an alternative method of operation of an integrity checking system embodying the present invention, and
Figure 4 is a flow diagram showing a further alternative method of operation of an integrally checking system embodying the present invention.

### Detailed Description of the Preferred Embodiments

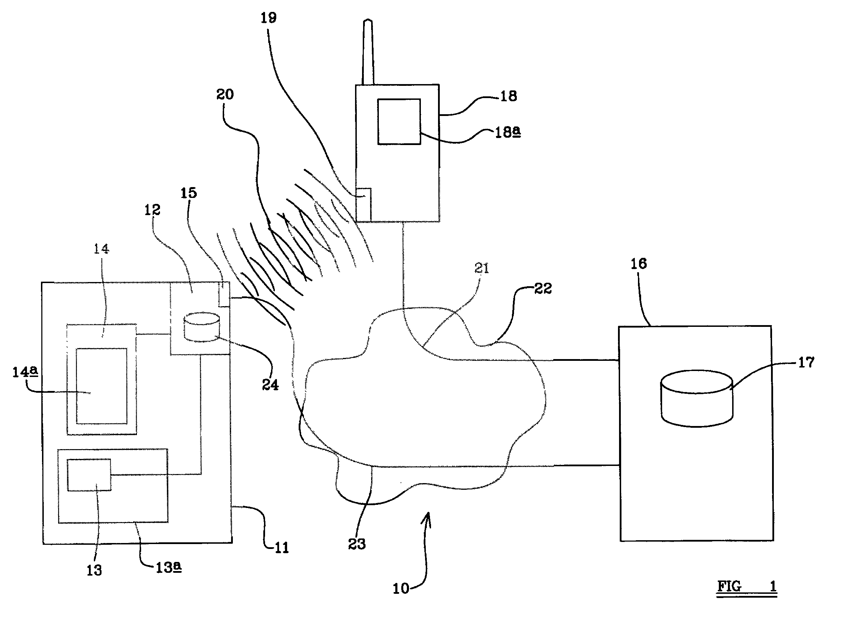

Referring now to Figure 1, an integrity checking system embodying the present invention is shown generally at 10. A computer is illustrated at 11, provided with a validation device illustrated at 12. The computer 11 comprises a BIOS 13 and an operating system 14 which are operable to detect changes in respectively the hardware, generally shown at 13a, and the software, generally shown at 14a of the computer 11 and pass the information to the validation device 12. The validation device 12 further comprises a wireless communication device 15.

The integrity checking system 10 further comprises a validating system 16 comprising a data storage medium 17. A portable communication device is shown at 18, which is provided with a screen 18a and an integrity checking part 19. The portable communication device (PCD) 17, may comprise a personal digital assistant (PDA) or a mobile cellular radio telephone or any other appropriate device as desired. The portable communication device 18 is operable to establish a wireless link 20 with the wireless communication device 15 of the validation device 12. The wireless link may comprise an infrared link, or a radio link, or any other link as desired. Advantageously, where the portable communication device 17 comprises a mobile telephone, the wireless link may comprise a radio link.

The portable communication device 18 is also operable to establish a connection 21 with the validating system 16 via the Internet 22. The validation device 12 is similarly able to establish a connection 23 with the validating system 16 via the Internet 22.

The validation device 12 further comprises a data storage medium 24, which holds an identification number associated with the computer 11. This identification number may for example be the serial number of the computer 11, or a universally unique identifier (UUID) provided with the validation device 12 or any other appropriate unique identifier as desired.

In broad outline, the integrity checking system operates as follows. Changes to the hardware and software of the computer 10 are reported to the validation device 12 by the BIOS 13 and the operating system 14 and may be stored in the data storage medium 24. Change information identifying the changes is supplied to the validating system 16. A user wishing to use the computer 11 may use his portable communication device 18 to establish a wireless link 20 with the validation device 12 to transmit a validity request and receive validation information in return. The portable communication device 18 may then establish a communication link with the validating system 16 to establish the integrity of the system, and receive a response indicating the integrity of the computer 11. The portable communication device 18 may then display the results of the validation, i.e. pass or fail, in this example on the screen 18a, and the user may then decide whether or not to use the computer 11. It may be required that the PCD 18 transmits an authorisation request to the validation device 12, which is then operable to check the authentication request before transmitting validation information to the PCD 18.

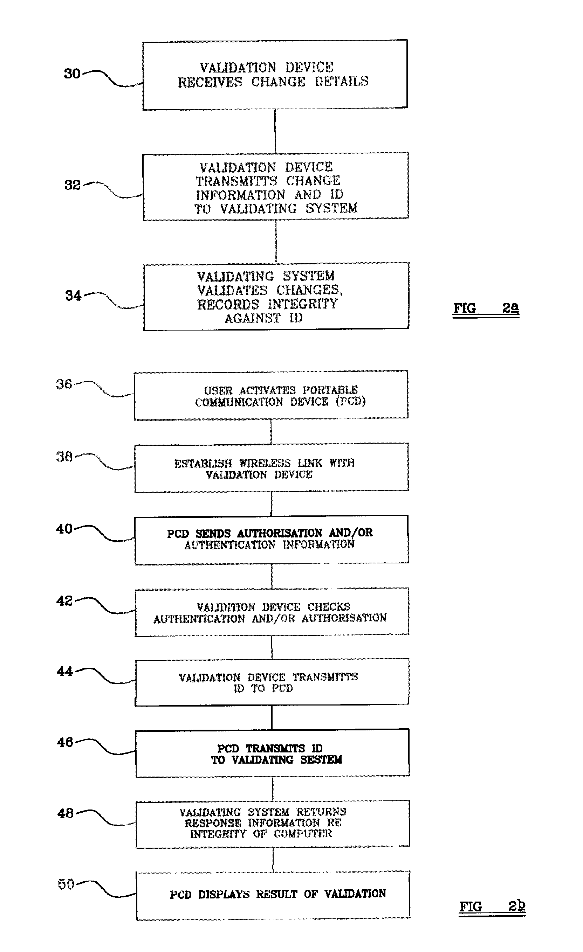

One method of operation will now be described with reference to Figures 2a and 2b.

When the computer 11 is first set up and provided with the validation device, information on the hardware and software of the computer 11 is provided to the validating system 16 and stored in the data storage medium 17, along with an identification number associated with the computer 11. In conventional manner, when the computer 11 is booted up, the BIOS 13 will scan the hardware components of the computer 11, and the operating system 14 will check the installed software components of the computer 11. When a new hardware or software component is identified, the BIOS or operating system respectively transmits details of the change to the validation device 12 as shown at step 30. The validating device 12 may store the change details in the data storage medium 24. At step 32, the validation device 12 then transmits the change information to the validating system 16, together with the identification number held in the data storage medium 24. The change information may be sent immediately via the Internet 22 or at any other time or by any other medium as required. The change information and machine ID may be suitably encrypted, for example using the public key of a public/private key pair associated with the validating system 16.

At step 34, the validating system 16 then checks the change information to validate the changes by any appropriate means as desired. This may for example include identifying the software components to check whether the new software components are validated by the manufacturer, checking checksums, digital certificates where appropriate, contacting the software manufacturer for verification of the integrity of the installed software component or any other appropriate method as desired. Similarly, any new hardware component may be checked for example by referring a serial number to the manufacturer for validation or by any other appropriate method. The validating system 16 may further comprise a list of approved software and hardware components which may be installed on the computer 11, and may assess that the integrity of the system has been violated if the new hardware and/or software component is not on the approved list, whether or not all other validity checks have been passed. On checking the changes, the validating system 16 then stores an integrity record in the data storage medium 17 against that computer's identification number and updates its image of the computer hardware and software components in light of the change information.

As shown in Figure 2b, when a user wishes to check the integrity of the computer 11, at step 36 they use a portable communication device 18 provided with a integrity checking element 19, which may be software or a hardware plug in or otherwise implemented as desired. At step 38, the PCD 18 establishes a wireless link 20 with the validation device 12. The PCD then sends an authentication request, shown at step 40, comprising authorisation or authentication information to the validation device 12 which at step 42 then checks the validity of the authentication and/or authorisation information, either against authorisation or authentication information held in the data storage medium 24 or by contacting the validating system 16 or by any other appropriate means as desired. If the authorisation or authentication is valid, the validation device 12 then transmits the identification number to the personal communication device 18 as shown at step 44. The personal communication device 18 transmits the identification number to the validating system 16, shown at step 46, which reads the data storage medium 17 and reads the integrity record associated with that identification number. As shown at step 48, a response is returned by the validating system 16 indicating the integrity or otherwise of the computer 11, and the PCD 18 displays the results of the validating step i.e. pass or fail to the user (step 50).

It will be apparent that the step of the PCD 18 supplying authorisation and/or authentication could be omitted. However, where it is desirable to hinder an attack on the integrity checking system 10, it may be desirable to keep the machine identification number confidential in which case it should be released only to authorised users and may be transmitted to the validating system 16 suitably encrypted, for example by using a public key of a public/private key pair associated with the validating system 16. Similarly, the response transmitted by the validating system 16 to the PCD 18 may be encrypted. By this method, only the machine ID and the integrity information is transmitted to the portable communication device 18, and information on the hardware and software configuration of the computer 11 is not disclosed to the user of the PCD 18.

In the following description of further embodiments, equivalent steps to those of the method described with reference to Figures 2a and 2b have the same reference numerals.

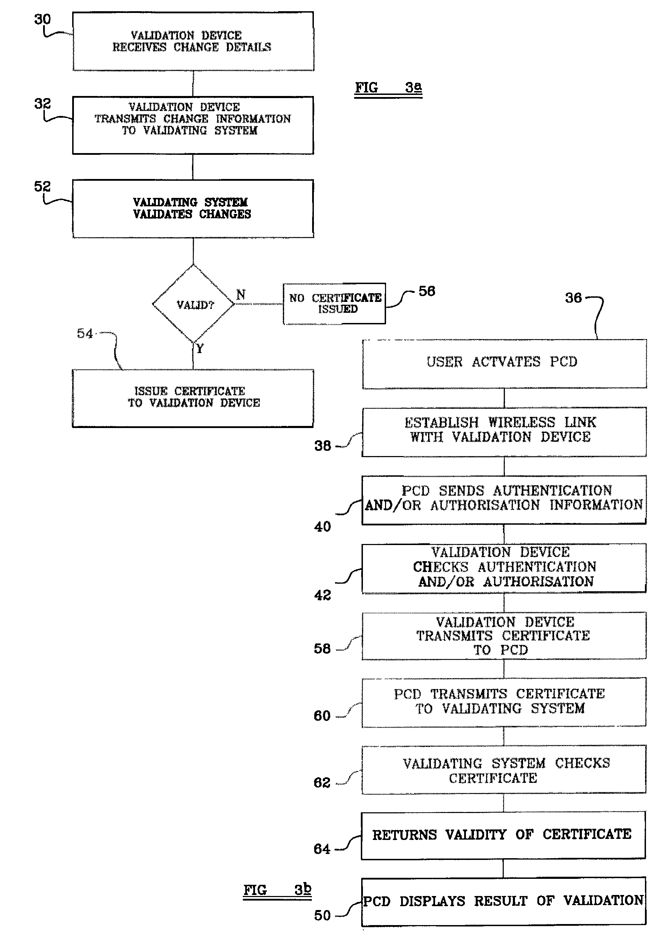

In an alternative method of operation as shown in Figure 3a and Figure 3b, the validation device 12 receives the change information and transmits it to the validating system 16 at step 30 and 32, as in the method of Figure 2a. The validating of the changes is checked at step 52. The validating system 16, then issues a digital certificate in known manner on checking the validity of the changes if the integrity of the computer is unviolated, at step 54, otherwise no certificate is issued (step 56). As shown in Figure 3b, the user follows the same steps 36 to 42 as shown in Figure 2b except that on accepting the authorisation and/authentication the validation device 12, at step 58 transmits the digital certificate to the portable communication device 18. At step 60 the portable communication device 18 then transmits the certificate to the validating system 16, for verification. The validating system 16 checks the digital certificate in known fashion, to check that it was indeed issued by the validating system 16, that the certificate has not expired and that the computer 11 has not failed an integrity check subsequent to the issue of that certificate (step 62). The validating system then return the validity or otherwise of the certificate to the PCD 18 at step 64, which displays the result (step 50).

In this method, the machine identity number is not disclosed to the user of the personal communication device 18. The step of transmitting the certificate to the validating system 16 for confirmation of validity may be omitted if the user 18 is confident of the reliability of the validating system 16 as shown by the certificate.

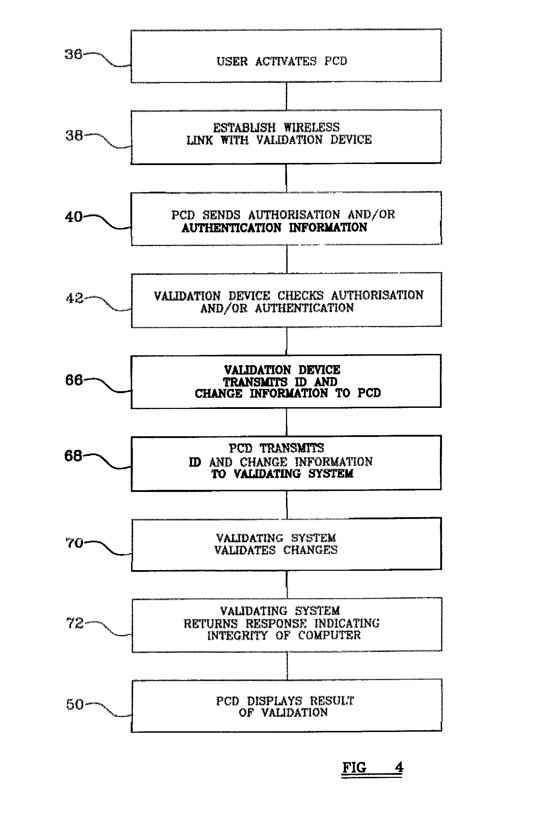

In a further alternative method of operation as shown in Figure 4, the validation device 12 may not send the change of information directly to the validating system 16. As in previous examples, at steps 36 to 42 a wireless link with the PCD 18 is established and the validation device 12 checks the authentication and/or authorisation supplied by the PCD 18. At step 66 the validation device then transmits the identification number and change information to the PCD 18 which then transmits this information to the validating system 16 (step 68). The ID and change information may be encrypted by the validation device 12, for example by using a public key of a public/private key pair associated with the validating system 16, such that the machine identification number and change information is not available to the user of the personal communication device 18. At step 70, the validating system 16 then reads the computer identification number and checks the changes as described hereinbefore, returning a response indicating the integrity of the computer (step 72) to the PCD 18 which then displays the results (step 50).

This method is appropriate for when the validation device 12 cannot transmit information to the validating system 16, for example where the computer 11 is provided with no Internet or other external link or in the event of failure of any such link. The change information is also only sent to the validating system 16 when it is desired to use the computer 11. However it will be apparent that the data storage medium 24 must be sufficient to store a relatively large amount of change information relating to a number of changes until validation is required. This embodiment of course requires that a potentially large amount of information is transmitted via the wireless link 20 and from the PCD 18 to the validating system 16, compared with a simple identification number or certificate in the methods of Figures 2b and 3b. There may be a consequent delay in receiving a response from the validating system 16 while the validity of the changes is checked.

The validating system 16 may update the system image stored in the data storage medium 17 in accordance with the change information in all embodiments.

In any embodiment, it is desirable that the operating system, BIOS and particularly the validation device 12 are resistant to hacking or subversion. The integrity of the BIOS and operating system be assured using any desirable technique, for example as disclosed in US 5421006. The validation device may comprise a separate hardware component with suitable physical encapsulation to hinder physical access to the validation device 12 and indeed to ensure the destruction of the validation device 12 if any attempt is made to access it. The validation device 12 may also comprise a software component either provided on a stand alone memory, for example on a ROM or ASIC or resident on the hard disk drive. In any case, the information and programs making up the validation device are preferably encrypted to further resist attacks.

Although the invention has been particularly described in connection with establishing a wireless connection between the PCD 18 and validation device 12, it will be apparent that a physical connection could be established, either between the PCD 18 and a suitable part of the validation device 12 or between the PCD 18 and a part of the computer 10.

In the present specification "comprises" means "includes or consists of" and "comprising" means "including or consisting of'.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A validation device (12) for a computer (11) comprising hardware and software, the validation device (12) being operable to;
record changes to the hardware and software,
and transmit change information identifying the changes to a validating system (16),
the validation device (12) further being operable to
receive a validity request from a portable communication device (18), and
transmit validation information to the portable communication device (18) to enable a user to check the integrity of the computer (11).

2. A validation device (12) according to claim 1, wherein the change information comprises an identification number identifying the computer.

3. A validation device according to claim 2 wherein the validation information comprises the identification number.

4. A validation device according to claim 2 or claim 3 wherein the validation information comprises the change information.

5. A validation device (12) according to any one of the preceding claims wherein the validation device (12) is operable to receive a certificate from the validating system (16) confirming the integrity of the computer (11) and store the certificate, and wherein the validation information comprises the certificate.

6. A validation device (12) according to any one of the preceding claims comprising a wireless communication device (15) whereby the validation device (12) can receive the validity request from the portable communication device (18) and transmit the validation information to the portable communication device (18).

7. A validation device (12) according to any one of the preceding claims operable to transmit the change information to the validating system via the Internet.

8. A portable communication device (18) operable to check the integrity of a computer (11), the portable communication device being operable to transmit a validity request to a validation device (12) associated with the computer (11), receive validation information from the validation device (12), transmit the validation information to a validating system (16) and receive a response from the validating system (16) indicating the integrity of the computer (11).

9. A portable communication device (18) according to claim 8 wherein the validation information comprises one or more of an identification number identifying the computer (11), change information identifying changes to hardware and software of the computer, and a certificate from a validating system (16).

10. A portable communication device (18) according to claim 8 or claim 9 operable to establish a wireless link with the validation device (12) whereby the portable communication device (18) can transmit the validity request to the validation device (12) and receive the validation information from the validation device (12).

11. A validating system (16) for validating changes to hardware and software of a computer (11), the validating system (16) being operable to receive change information identifying changes to the hardware and software, receive an identification number identifying the computer (11), check the validity of the changes and transmit a response indicating the integrity of the system.

12. A validating system (16) according to claim 11 wherein the change information is received from a validation device (12) associated with the computer (11) and wherein the response is transmitted to a portable communication device (18) which supplies the identification number.

13. A validating system (16) according to claim 11 wherein the change information is received from a validation device (12) associated with the computer (11) and wherein the response is transmitted to the validation device, the response comprising a certificate.

14. A validating system (16) according to claim 11 wherein the change information is received from a portable communication device (18) together with the identification number and wherein the response is transmitted to the portable communication device (18).

15. An integrity checking system (10) for a computer (11) comprising a validation device (12) according to any one of claims 1 to 7 and a validating system (16) according to any one of claims 11 to 14.

16. An integrity checking system (10) according to claim 15 comprising a portable communication device (18) according to any one of claims 8 to 10.
